# EUROPÄISCHE PATENTANMELDUNG

(11) **EP 4 015 776 A1**
(43) Veröffentlichungstag der Anmeldung: **22.06.2022**
(21) Anmeldenummer: 21214918.1
(22) Anmeldetag: 15.12.2021
(51) Int. Cl.: F01D 5/30, B23H 9/00, B23H 9/10, B23H 7/10, B23H 3/00

(54) **ROTORSCHEIBE UND LAUFSCHAUFEL FÜR EINE FLUGTRIEBWERK-GASTURBINEN-VERDICHTER- ODER TURBINENSTUFE**

(30) Priorität: 21.12.2020 DE 102020216436
(71) Anmelder: MTU Aero Engines AG, 80995 München (DE)
(72) Erfinder: Nachtigall, Hermann, 80995 München (DE)

(57) **Zusammenfassung**

Die vorliegende Erfindung betrifft ein Verfahren zum Herstellen einer Rotorscheibe (1) oder einer Laufschaufel (3) für eine Verdichter- oder Turbinenstufe einer Flugtriebwerk-Gasturbine, wobei wenigstens eine Schaufelnut (2) der Rotorscheibe zur Anordnung eines Schaufelfußes (3A) einer Laufschaufel (3) zur Befestigung der Laufschaufel an der Rotorscheibe (1) bzw. ein Schaufelfuß (3A) der Laufschaufel zur Anordnung in einer Schaufelnut (2) einer Rotorscheibe (1) zur Befestigung der Laufschaufel (3) an der Rotorscheibe unter Verwendung eines elektrochemischen Abtragens gefertigt wird und in Axialrichtung einen ein- oder mehrfach gekrümmten Verlauf aufweist.

## Beschreibung

Die vorliegende Erfindung betrifft eine Rotorscheibe sowie eine Laufschaufel für eine Verdichter- oder Turbinenstufe einer Flugtriebwerk-Gasturbine, eine Flugtriebwerk-Gasturbine und eine Verdichter- oder Turbinenstufe hierfür mit der Rotorscheibe und/oder Laufschaufel sowie ein Verfahren zum Herstellen der Rotorscheibe oder Laufschaufel.

Nach betriebsinterner Praxis werden in Rotorscheiben für Flugtriebwerk-Gasturbinen Schaufelnuten gefertigt, in die anschließend Laufschaufeln mit ihren Schaufelfüßen eingeschoben werden, um einen beschaufelten Rotor zu erhalten.

Diese Schaufelnuten werden aufgrund der bei Flugtriebwerken, insbesondere aufgrund ihrer Sicherheitsanforderungen und dynamischen und thermischen Belastungen, erforderlichen Bauteilqualität bisher nach betriebsinterner Praxis mittels Räumen gefertigt.

Durch Schaufelnuten und Schaufelfüße, die in Axialrichtung einen gekrümmten, beispielsweise kreissegmentförmigen Verlauf aufweisen, könnte vorteilhaft bei gleicher Scheiben- bzw. Schaufelfußdicke eine Kontaktfläche vergrößert und dadurch die Belastung reduziert oder umgekehrt bei gleicher Belastung die Scheiben- bzw. Schaufelfußdicke und damit Gewicht reduziert werden, was bei Flugtriebwerken von besonderer Bedeutung ist.

Solche gekrümmten Schaufelnuten können jedoch mittels Räumen nicht gefertigt werden. Entsprechend werden auch keine gekrümmten Schaufelfüße gefertigt.

Eine Aufgabe einer Ausführung der vorliegenden Erfindung ist es, Flugtriebwerk-Gasturbinen und/oder die Herstellung von Rotorscheiben und/oder Schaufelfüßen hierfür zu verbessern.

Diese Aufgabe wird durch ein Verfahren mit den Merkmalen des Anspruchs 1 bzw. 2 bzw. eine nach einem hier beschriebenen Verfahren hergestellte Rotorscheibe mit den Merkmalen des Anspruchs 12bzw. eine nach einem hier beschriebenen Verfahren hergestellte Laufschaufel mit den Merkmalen des Anspruchs 13 gelöst. Ansprüche 14, 15 stellen eine Flugtriebwerk-Gasturbine bzw. Verdichter- oder Turbinenstufe hierfür mit wenigstens einer hier beschriebenen bzw. nach einem hier beschriebenen Verfahren hergestellten Rotorscheibe und/oder wenigstens einer hier beschriebenen bzw. nach einem hier beschriebenen Verfahren hergestellten Laufschaufel unter Schutz. Vorteilhafte Ausführungsformen der Erfindung sind Gegenstand der Unteransprüche.

Nach einer Ausführung der vorliegenden Erfindung weist eine Rotorscheibe für eine Verdichterstufe oder Turbinenstufe einer Flugtriebwerk-Gasturbine bzw. eine Rotorscheibe wenigstens einer Verdichterstufe und/oder eine Rotorscheibe wenigstens einer Turbinenstufe für eine bzw. einer Flugtriebwerk-Gasturbine eine oder mehrere, insbesondere in Umfangsrichtung verteilte Schaufelnut(en) auf, in der bzw. den(en) bzw. die (jeweils) ein Schaufelfuß einer Laufschaufel angeordnet, in einer Ausführung eingeführt, insbesondere -schoben, ist bzw. wird und dadurch die Laufschaufel an der Rotorscheibe befestigt bzw. die hierzu vorgesehen, insbesondere eingerichtet, ist/sind bzw. verwendet wird/werden.

Nach einer Ausführung der vorliegenden Erfindung weist diese Schaufelnut bzw. eine oder mehrere, vorzugsweise alle, dieser Schaufelnuten (jeweils) in Axialrichtung einen ein- oder mehrfach gekrümmten Verlauf auf.

Zusätzlich oder alternativ weist nach einer Ausführung der vorliegenden Erfindung der Schaufelfuß wenigstens einer Laufschaufel für eine Verdichterstufe oder Turbinenstufe einer Flugtriebwerk-Gasturbine bzw. der Schaufelfuß wenigstens einer Laufschaufel wenigstens einer Verdichterstufe und/oder der Schaufelfuß wenigstens einer Laufschaufel wenigstens einer Turbinenstufe für eine bzw. einer Flugtriebwerk-Gasturbine (jeweils) in Axialrichtung einen ein- oder mehrfach gekrümmten Verlauf auf, wobei der Schaufelfuß in eine(r) Schaufelnut einer Rotorscheibe, in einer Ausführung einer hier beschriebenen bzw. nach einem hier beschriebenen Verfahren hergestellten Rotorscheibe, angeordnet, in einer Ausführung eingeführt, insbesondere -schoben, ist bzw. wird und dadurch die Laufschaufel an der Rotorscheibe befestigt, bzw. ist hierzu vorgesehen, insbesondere eingerichtet, bzw. wird hierzu verwendet.

In einer Ausführung weisen Schaufelnut und in dieser befestigbare, insbesondere befestigte, in einer Ausführung einschiebbare, insbesondere eingeschobene, Schaufelfuß wenigstens teilweise kongurente bzw. komplementäre Konturen, insbesondere Flanken, in einer Ausführung (mit) formschlüssig ineinandergreifende(n) Vorsprünge bzw. Aussparungen in Umfangsrichtung, auf. Hierdurch kann in einer Ausführung die Befestigung der Laufschaufel an der Rotorscheibe verbessert werden.

Eine Axialrichtung ist in einer Ausführung parallel zu einer Dreh- bzw. (Haupt)Maschinenachse der Verdichter- bzw. Turbinenstufe bzw. Flugtriebwerk-Gasturbine, eine Umfangsrichtung entsprechend eine Rotationsrichtung um diese Dreh- bzw. (Haupt)Maschinenachse und eine Radialrichtung eine zur Axial- und Umfangsrichtung senkrechte Richtung bzw. Richtung(sachse), die diese Dreh- bzw. (Haupt)Maschinenachse senkrecht schneidet, insbesondere von dieser weg (weist).

Ein in Axialrichtung gekrümmter Verlauf kann insbesondere dadurch gekennzeichnet sein, dass die Querschnitte der Schaufelnut bzw. des Schaufelfußes in zwei um eine Distanz axial voneinander beabstandeten Schnitten senkrecht zur Axialrichtung, insbesondere ihre Schwerpunkte, Mittel-, gegebenenfalls Symmetrielinien und/oder einander entsprechende, insbesondere kongruente Konturabschnitte, gegeneinander in Umfangsrichtung um einen ersten Winkel versetzt sind und zwei andere um dieselbe Distanz axial voneinander beabstandeten Schnitten senkrecht zur Axialrichtung, insbesondere ihre Schwerpunkte, Mittel-, gegebenenfalls Symmetrielinien und/oder einander entsprechende, insbesondere kongruente Konturabschnitte, gegeneinander in Umfangsrichtung um einen von dem ersten Winkel verschiedenen zweiten Winkel versetzt sind.

Ein in Axialrichtung mehrfach gekrümmter Verlauf kann insbesondere dadurch gekennzeichnet sein, dass der Verlauf mehrere unterschiedliche Krümmungen aufweist, in einer Ausführung wenigstens zwei gegensinnige Krümmungen und/oder wenigstens zwei betragsmäßige unterschiedliche Krümmung(sradi)en. Ein in Axialrichtung einfach gekrümmter Verlauf kann insbesondere dadurch gekennzeichnet sein, dass der Verlauf eine einzige bzw. überall dieselbe Krümmung aufweist.

Durch Schaufelnuten bzw. -füße, die in Axialrichtung einen gekrümmten Verlauf aufweisen, können, wie einleitend erläutert, in einer Ausführung vorteilhaft bei gleicher Scheiben- bzw. Fußdicke Kontaktflächen zwischen Rotorscheibe und Laufschaufel(füße)n vergrößert und dadurch die Belastung reduziert und/oder die Scheiben- bzw. Fußdicke und damit Gewicht reduziert werden, was bei Flugtriebwerken von besonderer Bedeutung ist.

Nach einer Ausführung kann die Schaufelnut teilweise oder vollständig über ihren Querschnitt durchgängig in Axialrichtung durch die Rotorscheibe verlaufen. Dadurch können die zwischen den Scheibennuten angeordneten Scheibenhöcker in Umfangsrichtung getrennt und/oder spannungstechnisch entkoppelt vorliegen, was vorteilhaft für die Lebenddauer sein kann.

Die vorliegende Erfindung umfasst auch eine zu dieser Ausführung komplementäre Schaufel, die axialen Schaufelfußflächen, wenn die Schaufel in die Scheibennut eingesetzt ist, axial beidseitig teilweise oder vollständig freiliegen.

Nach einer Ausführung der vorliegenden Erfindung wird nun vorgeschlagen, dass die in Axialrichtung ein- oder mehrfach gekrümmte Schaufelnut bzw. eine oder mehrere, vorzugsweise alle, der in Axialrichtung ein- oder mehrfach gekrümmten Schaufelnuten der Rotorscheibe, in einer Ausführung nacheinander, unter Verwendung eines ein- oder mehrstufigen elektrochemischen Abtragens bzw. ECM-Verfahrens ("Electro Chemical Machining") gefertigt wird/werden bzw. ist/sind.

Nach einer Ausführung der vorliegenden Erfindung wird zusätzlich oder alternativ vorgeschlagen, dass der in Axialrichtung ein- oder mehrfach gekrümmte Schaufelfuß der bzw. einer oder mehrerer Laufschaufel(n jeweils) unter Verwendung eines ein- oder mehrstufigen elektrochemischen Abtragens bzw. ECM-Verfahrens gefertigt wird/werden bzw. ist/sind.

Dadurch können die Schaufelnut(en) bzw. -füße in einer Ausführung besonders vorteilhaft, insbesondere mit vorteilhaften Konturen und/oder Verläufen in Axialrichtung und/oder Oberflächen und/oder geringe(re)n Spannungen und/oder ohne Nachbearbeitung gefertigt werden.

In einer besonders bevorzugten Ausführung umfasst das bzw. ein zur Fertigung der Schaufelnut(en) und/oder das bzw. ein zur Fertigung der Schaufelfüße verwendetes elektrochemisches Abtragen bzw. ECM-Verfahren eine oszillierende Kathodenbewegung und einen gepulsten elektrischen Strom (" Precise Electrochemical Machining", PECM).

Dadurch können die Schaufelnut(en) bzw. -füße in einer Ausführung besonders vorteilhaft, insbesondere mit vorteilhaften Konturen und/oder Verläufen in Axialrichtung und/oder Oberflächen und/oder geringe(re)n Spannungen und/oder ohne Nachbearbeitung gefertigt werden.

Zusätzlich oder alternativ umfasst in einer besonders bevorzugten Ausführung das bzw. ein zur Fertigung der Schaufelnut(en) und/oder das bzw. ein zur Fertigung der Schaufelfüße verwendetes elektrochemisches Abtragen bzw. ECM-Verfahren eine gepulste Stromführung bei kontinuierlicher Kathodenbewegung (" Pulsed Electrochemical Machining", Puls-ECM).

Dadurch können die Schaufelnut(en) bzw. -füße in einer Ausführung besonders vorteilhaft, insbesondere mit vorteilhaften Konturen und/oder Verläufen in Axialrichtung und/oder Oberflächen und/oder geringe(re)n Spannungen und/oder ohne Nachbearbeitung gefertigt werden.

In einer Ausführung kann das bzw. ein zur Fertigung der Schaufelnut(en) und/oder das bzw. ein zur Fertigung der Schaufelfüße verwendetes elektrochemisches Abtragen bzw. ECM-Verfahren zusätzlich oder alternativ ein elektrochemisches Mikrofräsen bzw. ECF-Verfahren umfassen.

In einer Ausführung kann das bzw. ein zur Fertigung der Schaufelnut(en) und/oder das bzw. ein zur Fertigung der Schaufelfüße verwendetes elektrochemisches Abtragen bzw. ECM-Verfahren ein ECDM-Verfahren ("Electro Chemical Discharge Machining"(-Verfahren)) umfassen.

Die vorgenannten PECM- bzw. Puls-ECM-Verfahren sind, insbesondere für die Nutherstellung und/oder aufgrund der hierbei herstellbaren bzw. hergestellten Oberflächen, besonders vorteilhaft bzw. bevorzugt.

In einer Ausführung wird bzw. ist eine Kontur der Schaufelnut bzw. einer oder mehrerer, vorzugsweise aller, der Schaufelnuten (jeweils) wenigstens abschnittsweise, in einer Ausführung wenigstens 50% einer Nutflanke, vorzugsweise wenigstens 50% beider Nutflanken, der Kontur, mittels elektrochemischen Abtragens, insbesondere mittels ECF und/oder ECDM und/oder besonders bevorzugt mittels PECM und/oder Puls-ECM, endgefertigt, in einer Ausführung ohne materialabtragende Nachbearbeitung.

Entsprechend weist bzw. weisen in einer Ausführung die Schaufelnut bzw. eine oder mehrere, vorzugsweise alle, der Schaufelnuten (jeweils) eine Kontur auf, die wenigstens abschnittsweise, insbesondere auf wenigstens 50% einer Nutflanke, vorzugsweise wenigstens 50% beider Nutflanken, mittels elektrochemischen Abtragens, insbesondere mittels ECF und/oder ECDM und/oder besonders bevorzugt mittels PECM und/oder Puls-ECM, endgefertigt ist, in einer Ausführung ohne materialabtragende Nachbearbeitung, bzw. eine hieraus resultierende bzw. dieser entsprechende Oberfläche, insbesondere Oberflächengüte, aufweist.

In einer Ausführung wird bzw. ist eine Kontur des Schaufelfußes der bzw. einer oder mehrerer Laufschaufel(n jeweils) wenigstens abschnittsweise, in einer Ausführung wenigstens 50% einer Schaufelfußflanke, vorzugsweise wenigstens 50% beider Schaufelfußflanken, der Kontur, mittels elektrochemischen Abtragens, insbesondere mittels ECF und/oder ECDM und/oder besonders bevorzugt mittels PECM und/oder Puls-ECM, endgefertigt, in einer Ausführung ohne materialabtragende Nachbearbeitung.

Entsprechend weist bzw. weisen in einer Ausführung der Schaufelfuß der bzw. einer oder mehrerer Laufschaufel(n jeweils) eine Kontur auf, die wenigstens abschnittsweise, insbesondere auf wenigstens 50% einer Schaufelfußflanke, vorzugsweise wenigstens 50% beider Schaufelfußflanken, mittels elektrochemischen Abtragens, insbesondere mittels ECF und/oder ECDM und/oder besonders bevorzugt mittels PECM und/oder Puls-ECM, endgefertigt ist, in einer Ausführung ohne materialabtragende Nachbearbeitung, bzw. eine hieraus resultierende bzw. dieser entsprechende Oberfläche, insbesondere Oberflächengüte, aufweist.

Eine (Nut- bzw. Schaufelfuß)Flanke ist in einer Ausführung eine Flanke in Umfangsrichtung (gesehen).

Dadurch können in einer Ausführung besonders belastete, insbesondere tragende Bereiche der Schaufelnut(en) bzw. -füße besonders vorteilhaft, insbesondere mit vorteilhaften Verläufen in Axialrichtung und/oder Oberflächen und/oder geringe(re)n Spannungen und/oder schnell(er) und/oder präzise(r) realisiert werden.

Zusätzlich oder alternativ wird/werden bzw. ist/sind in einer Ausführung die Schaufelnut bzw. eine oder mehrere, vorzugsweise alle, der Schaufelnuten (jeweils) mittels elektrochemischen Abtragens, insbesondere mittels ECF und/oder ECDM und/oder besonders bevorzugt mittels PECM und/oder Puls-ECM, erzeugt, in einer Ausführung aus dem Vollen bzw. Vollmaterial und/oder ohne materialabtragende Nachbearbeitung.

Zusätzlich oder alternativ wird/werden bzw. ist/sind in einer Ausführung der Schaufelfuß der bzw. einer oder mehrerer Laufschaufel(n jeweils) mittels elektrochemischen Abtragens, insbesondere mittels ECF und/oder ECDM und/oder besonders bevorzugt mittels PECM und/oder Puls-ECM, erzeugt, in einer Ausführung aus dem Vollen bzw. Vollmaterial und/oder ohne materialabtragende Nachbearbeitung.

Dadurch können in einer Ausführung Schaufelnuten bzw. -füße mit vorteilhaft geringe(re)n Spannungen und/oder thermischen Belastungen gefertigt werden, und in manchen Ausführungen auch gänzlich ohne Spannungen und/oder thermischen Belastungen gefertigt werden.

In einer anderen Ausführung können auch zunächst Kernbereiche der Schaufelnuten und/oder Kernbereiche von Aussparungen bzw. Rücksprüngen an Schaufelfüßen mittels eines anderen, insbesondere materialabtragenden, Fertigungsverfahrens, insbesondere mit bestimmter oder unbestimmter Schneide, vorzugsweise durch Fräsen oder dergleichen, gefertigt und anschließend die Konturen mittels elektrochemischen Abtragens (end)gefertigt werden.

Dadurch können in einer Ausführung Schaufelnuten bzw. -füße gegebenenfalls günstig(er) gefertigt werden.

In einer Ausführung weist ein Werkzeug, das zum bzw. beim elektrochemischen Abtragen zur Fertigung, insbesondere Endfertigung, der Schaufelnut(en) bzw. (Abschnitten der) Schaufelnut-Konturen, verwendet wird, in einer Ausführung eine Elektrode, insbesondere Kathode, zum elektrochemischen Abtragen und/oder ein Elektroden- bzw. Kathodenhalter für diese Elektrode- bzw. Kathode, eine gekrümmte, vorzugsweise dem gekrümmten Verlauf der Schaufelnut(en) entsprechende, insbesondere zu einem Abschnitt der gekrümmten Kontur der Schaufelnut(en) in Axialrichtung kongruente, Kontur auf und/oder wird, in einer Ausführung mechanisch und/oder automatisch bzw. maschinell, auf einer gekrümmten Bahn, in einer Ausführung längs des (gewünschten bzw. zu fertigenden) Nutverlaufs, geführt.

Zusätzlich oder alternativ weist in einer Ausführung ein Werkzeug, das zum bzw. beim elektrochemischen Abtragen zur Fertigung, insbesondere Endfertigung, des Schaufelfußes der Laufschaufel bzw. der Schaufelfüße der Laufschaufeln bzw. (Abschnitten der) Schaufelfuß-Konturen, verwendet wird, in einer Ausführung eine Elektrode, insbesondere Kathode, zum elektrochemischen Abtragen und/oder ein Elektroden- bzw. Kathodenhalter für diese Elektrode- bzw. Kathode, eine gekrümmte, vorzugsweise dem gekrümmten Verlauf des Schaufelfußes entsprechende, insbesondere zu einem Abschnitt der gekrümmten Kontur des Schaufelfußes in Axialrichtung kongruente, Kontur auf und/oder wird, in einer Ausführung mechanisch und/oder automatisch bzw. maschinell, auf einer gekrümmten Bahn, in einer Ausführung längs des (gewünschten bzw. zu fertigenden) Fußverlaufs, geführt.

Dadurch können in einer Ausführung die Schaufelnuten bzw. -füße besonders vorteilhaft, insbesondere schnell(er) und/oder präzise(r), gefertigt werden.

In einer Ausführung umfasst, in einer Ausführung ist, der gekrümmte Verlauf der Schaufelnut bzw. einer oder mehrerer, vorzugsweise aller, Schaufelnuten der Rotorscheibe (jeweils) eine Kreisbahn um einen Kreismittelpunkt.

Hierdurch kann in einer Ausführung die Herstellung und/oder Lasteinleitung und/oder -verteilung verbessert werden.

In einer Weiterbildung liegt der Kreismittelpunkt dieser Kreisbahn - in Axialrichtung und/oder Radialrichtung betrachtet - innerhalb der Scheibe. Hierdurch kann in einer Ausführung die Lasteinleitung verbessert werden.

In einer anderen Weiterbildung liegt der Kreismittelpunkt dieser Kreisbahn - in Axialrichtung und/oder Radialrichtung betrachtet - außerhalb der Scheibe. Hierdurch kann in einer Ausführung die Herstellung und/oder Lastverteilung verbessert werden.

Zusätzlich oder alternativ verläuft in einer Ausführung der gekrümmte Verlauf der Schaufelnut bzw. einer oder mehrerer, vorzugsweise aller, Schaufelnuten der Rotorscheibe (jeweils) vollständig oder (nur) teilweise innerhalb einer Ebene.

Hierdurch kann in einer Ausführung die Herstellung und/oder Lasteinleitung und/oder -verteilung verbessert werden.

In einer Weiterbildung verläuft diese Ebene parallel zur Axialrichtung. Hierdurch kann in einer Ausführung die Herstellung und/oder Lastverteilung verbessert werden.

Alternativ oder zusätzlich kann diese Ebene senkrecht zur Radialrichtung, insbesondere zu einer Radialrichtung durch die Schaufelnut, verlaufen und/oder senkrecht zu einer umfangshalbierenden Fläche der Schaufelnut durch die Schaufelnut verlaufen. Mit anderen Worten kann die Schaufelnut eine konstante oder im wesentlichen konstante Nuttiefe haben und/oder kann der Nutzgrund parallel zu dieser Ebene, welche damit tangential zu der Rotorscheibe durch die Schaufelnut verläuft, verlaufen. Die Schaufelnut kann damit also quer zur Schaufelnut in Umfangsrichtung gebogen oder gekrümmt sein. Dies ermöglicht eine spannungstechnisch besonders vorteilhafte Schaufel-Scheibe-Verbindung, bei welcher die Neigung zwischen der Kontaktfläche und der Fliehkraftrichtung entlang der Schaufelnut im Wesentlichen konstant bleiben kann. Zudem kann eine Achse, um welche die Krümmung, insbesondere konzentrisch verläuft, parallel zur Rotorscheibenebene, beispielsweise außerhalb, innerhalb oder tangential (zu) der Rotorscheibe verlaufen, was verfahrenstechnisch und/oder anlagentechnisch besonders vorteilhaft sein kann. Bei einer solchen Herstellung mehrerer oder aller Schaufelnuten kann dabei von einer zur nächsten Schaufelnut übergegangen werden, indem die Rotorscheibenebene ein entsprechendes Stück um ihre Drehachse gedreht wird.

Ein weiterer Vorteil liegt in der Möglichkeit, den Krümmungsverlauf des Schaufelfußes in Bezug auf einen Krümmungsverlauf im Schaufelblattbereich entsprechend, daran angepasst, daran angelehnt und/oder mit gleichem Vorzeichen (d.h. ebenfalls konvex oder konkav bei einer Betrachtung in einer jeweiligen Schnittebene mit derselben Orientierung senkrecht zur Längsachse der Schaufel) auszugestalten. Dadurch können die Schaufeln kompakter, leichter und mit einem verbesserten Kraftfluss ausgebildet werden, und engerliegend angeordnet und/oder montiert werden.

In einer anderen Weiterbildung verläuft diese Ebene gekippt zur Axialrichtung. Hierdurch kann in einer Ausführung die Lasteinleitung verbessert werden.

In einer Ausführung umfasst, in einer Ausführung ist, der gekrümmte Verlauf des Schaufelfußes der bzw. einer oder mehrerer Laufschaufel(n jeweils) eine Kreisbahn um einen Kreismittelpunkt.

Hierdurch kann in einer Ausführung die Herstellung und/oder Lasteinleitung und/oder -verteilung verbessert werden.

Zusätzlich oder alternativ verläuft in einer Ausführung der gekrümmte Verlauf des Schaufelfußes der bzw. einer oder mehrerer Laufschaufel(n jeweils) vollständig oder (nur) teilweise innerhalb einer Ebene.

Hierdurch kann in einer Ausführung die Herstellung und/oder Lasteinleitung und/oder -verteilung verbessert werden.

In einer Weiterbildung verläuft diese Ebene parallel zur Axialrichtung. Hierdurch kann in einer Ausführung die Herstellung und/oder Lastverteilung verbessert werden.

In einer anderen Weiterbildung verläuft diese Ebene gekippt zur Axialrichtung. Hierdurch kann in einer Ausführung die Lasteinleitung verbessert werden.

In einer Ausführung weist die Schaufelnut bzw. eine oder mehrere, vorzugsweise alle, Schaufelnuten der Rotorscheibe (jeweils) in Axialrichtung einen kreissegmentförmigen Verlauf bzw. einen Verlauf in Form eines Kreissegments auf.

Dadurch können in einer Ausführung die Schaufelnut(en) besonders vorteilhaft, insbesondere mit geringe(re)n Spannungen und/oder schnell(er) und/oder präzise(r) gefertigt werden. Zusätzlich oder alternativ können hierdurch in einer Ausführung Belastungen zwischen Rotorscheibe und Laufschaufel(füße)n besonders vorteilhaft reduziert werden.

In einer Ausführung beträgt ein Radius R dieses Kreissegments bzw. einer kreissegmentförmigen Mittellinie der Schaufelnut wenigstens c/2 und/oder höchstens 100c, in einer Ausführung höchstens 50c, insbesondere höchstens 30c, in einer Ausführung höchstens 20c, in einer Weiterbildung höchstens 5c.

Zusätzlich oder alternativ weist ein Mittelpunkt des Kreissegments bzw. einer kreissegmentförmigen Mittellinie der Schaufelnut von einer axialen Mitte der Rotorscheibe in Axialrichtung einen Abstand von höchstens (R-c/2), insbesondere höchstens (R-c), in einer Ausführung höchstens (R-5c) auf.

Dabei ist c ein, insbesondere minimaler, maximaler oder mittlerer, axialer Abstand zwischen einer stromaufwärtigen und einer stromabwärtigen axialen Stirnseite der Schaufelnut.

In einer Ausführung weist der Schaufelfuß der bzw. einer oder mehrerer Laufschaufel(n jeweils) in Axialrichtung einen kreissegmentförmigen Verlauf bzw. einen Verlauf in Form eines Kreissegments auf.

Dadurch können in einer Ausführung die Schaufelfüße besonders vorteilhaft, insbesondere mit geringe(re)n Spannungen und/oder schnell(er) und/oder präzise(r) gefertigt werden. Zusätzlich oder alternativ können hierdurch in einer Ausführung Belastungen zwischen Rotorscheibe und Laufschaufel(füße)n besonders vorteilhaft reduziert werden.

In einer Ausführung beträgt ein Radius R dieses Kreissegments bzw. einer kreissegmentförmigen Mittellinie des Schaufelfußes wenigstens c/2 und/oder höchstens 100c, in einer Ausführung höchstens 50c, insbesondere höchstens 30c, in einer Ausführung höchstens 20c, in einer Weiterbildung höchstens 5c

Zusätzlich oder alternativ weist ein Mittelpunkt des Kreissegments bzw. einer kreissegmentförmigen Mittellinie des Schaufelfußes von einer axialen Mitte des Schaufelfußes in Axialrichtung einen Abstand von höchstens (R-c/2), insbesondere höchstens (R-c), in einer Ausführung höchstens (R-5c) auf.

Dabei bzw. in Bezug auf den Schaufelfuß bzw. dessen kreissegmentförmigen Verlauf ist c ein, insbesondere minimaler, maximaler oder mittlerer, axialer Abstand zwischen einer stromaufwärtigen und einer stromabwärtigen axialen Stirnseite des Schaufelfußes.

Dadurch können in einer Ausführung Belastungen zwischen Rotorscheibe und Laufschaufel(füße)n jeweils besonders vorteilhaft reduziert werden.

In einer Ausführung ist eine stromaufwärtige axiale, vorzugsweise offene, Stirnseite der bzw. einer oder mehrerer der Schaufelnut(en jeweils) gegenüber einer stromabwärtigen axialen, vorzugsweise offenen, Stirnseite dieser (jeweiligen) Schaufelnut in Rotationsrichtung gesehen nicht versetzt bzw. fluchtet mit dieser in axialer Richtung gesehen. Hierdurch kann in einer Ausführung die Herstellung verbessert werden.

In einer anderen Ausführung ist eine stromaufwärtige axiale, vorzugsweise offene, Stirnseite der bzw. einer oder mehrerer der Schaufelnut(en jeweils) gegenüber einer stromabwärtigen axialen, vorzugsweise offenen, Stirnseite dieser (jeweiligen) Schaufelnut in oder entgegen der Rotationsrichtung versetzt, in einer Ausführung um höchstens c, insbesondere höchstens c/2, in einer Ausführung höchstens c/4, wobei c ein, insbesondere minimaler, maximaler oder mittlerer, axialer Abstand zwischen einer stromaufwärtigen und einer stromabwärtigen axialen Stirnseite der Schaufelnut ist. Hierdurch kann in einer Ausführung die Lastverteilung verbessert werden.

Zusätzlich oder alternativ ist in einer Ausführung eine stromaufwärtige axiale Stirnseite des Schaufelfußes der bzw. einer oder mehrerer der Laufschaufel(n jeweils) gegenüber einer stromabwärtigen axialen Stirnseite dieses (jeweiligen) Schaufelfußes in oder entgegen der Rotationsrichtung versetzt, in einer Ausführung um höchstens c, insbesondere höchstens c/2, in einer Ausführung höchstens c/4, wobei c ein, insbesondere minimaler, maximaler oder mittlerer, axialer Abstand zwischen einer stromaufwärtigen und einer stromabwärtigen axialen Stirnseite des Schaufelfußes ist.. Hierdurch kann in einer Ausführung die Lastverteilung verbessert werden.

In einer anderen Ausführung ist eine stromaufwärtige axiale Stirnseite des Schaufelfußes der bzw. einer oder mehrerer der Laufschaufel(n jeweils) gegenüber einer stromabwärtigen axialen Stirnseite dieses (jeweiligen) Schaufelfußes in Rotationsrichtung gesehen nicht versetzt bzw. fluchtet mit dieser in axialer Richtung gesehen. Hierdurch kann in einer Ausführung die Herstellung verbessert werden.

In einer Ausführung weist eine bzw. die stromaufwärtige axiale, vorzugsweise offene, Stirnseite der bzw. einer oder mehrerer der Schaufelnut(en jeweils) gegenüber einer bzw. der stromabwärtigen axialen, vorzugsweise offenen, Stirnseite dieser (jeweiligen) Schaufelnut einen axialen Abstand von wenigstens 10 mm und/oder höchstens 100 mm auf, beispielsweise im Bereich 35 mm bis 55 mm oder im Bereich 20 mm bis 40 mm. In einer Ausführung entspricht dieser axiale Abstand einer (relevanten) Scheibendicke.

Zusätzlich oder alternativ weist in einer Ausführung eine bzw. die stromaufwärtige axiale Stirnseite des Schaufelfußes der bzw. einer oder mehrerer der Laufschaufel(n jeweils) gegenüber einer bzw. der stromabwärtigen axialen Stirnseite dieses (jeweiligen) Schaufelfußes einen axialen Abstand von wenigstens 10 mm und/oder höchstens 100 mm auf, beispielsweise im Bereich 35 mm bis 55 mm oder im Bereich 20 mm bis 40mm. In einer Ausführung entspricht dieser axiale Abstand einer (relevanten) Fußdicke.

Dadurch können in einer Ausführung Belastungen zwischen Rotorscheibe und Laufschaufel(füße)n besonders vorteilhaft reduziert werden.

In einer Ausführung weist/weisen die bzw. eine oder mehrere der Schaufelnut(en jeweils) wenigstens abschnittsweise, insbesondere auf wenigstens 50% einer Nutflanke, einen Mittenrauwert, insbesondere einen Mittenrauwert Ra nach DIN EN ISO 4287:2010, von höchstens 2,0 µm, insbesondere höchstens 1,6 µm und in einer Ausführung höchstens 0,6 µm auf.

Zusätzlich oder alternativ weist/weisen der Schaufelfuß der bzw. einer oder mehrerer der Laufschaufel(n jeweils) wenigstens abschnittsweise, insbesondere auf wenigstens 50% einer Fußflanke, einen Mittenrauwert, insbesondere einen Mittenrauwert Ra nach DIN EN ISO 4287:2010, von höchstens 2,0 µm, insbesondere höchstens 1,6 µm und in einer Ausführung höchstens 0,6 µm auf.

Dadurch können in einer Ausführung Belastungen zwischen Rotorscheibe und Laufschaufel(füße)n besonders vorteilhaft reduziert und/oder auf eine materialabtragende Nachbearbeitung verzichtet werden.

In einer Ausführung weist/weisen die bzw. eine oder mehrere der Schaufelnut(en jeweils) und/oder der Schaufelfuß der bzw. einer oder mehrerer der Laufschaufel(n jeweils) in Radialrichtung eine oder mehrere Hinterschneidungen auf, in einer Ausführung ein Schwalbenschwanz(profil bzw. -querschnitt) oder Tannenbaumprofil(profil bzw. -querschnitt).

Dadurch kann in einer Ausführung die Montage und/oder Ankopplung der Laufschaufel(n) an die Rotorscheibe verbessert, insbesondere vereinfacht und/oder ihre Zuverlässigkeit erhöht, werden.

Die vorliegende Erfindung ist, insbesondere aufgrund der thermischen, aerodynamischen und/oder mechanischen Randbedingungen und insbesondere der daraus resultierenden Materialien, für Verdichter-, insbesondere aber für Turbinenstufen von Flugtriebwerk-Gasturbinen besonders geeignet. Entsprechend wird nach einer Ausführung der vorliegenden Erfindung eine Verdichter- oder Turbinenstufe für eine Flugtriebwerk-Gasturbine mit wenigstens einer Rotorscheibe und wenigstens einer Laufschaufel unter Schutz gestellt, die bzw. deren Schaufelfuß an bzw. in (einer (der) Schaufelnut(en)) der Rotorscheibe, in einer Ausführung form- und/oder reibschlüssig, befestigt bzw. (hierzu) angeordnet ist bzw. wird, wobei die Rotorscheibe eine hier beschriebene Rotorscheibe und/oder die Laufschaufel eine hier beschriebene Laufschaufel ist.

Soweit vorliegend auf einen axialen Abstand zwischen axialen Stirnseiten Bezug genommen ist, ist damit in einer Ausführung der axialen Abstand zwischen axialen Stirnseiten der Schaufelnut gemeint, wenn die (Herstellung der) Rotorscheibe bzw. (von) deren Schaufelnut erläutert wird. Entsprechend ist, soweit vorliegend auf einen axialen Abstand zwischen axialen Stirnseiten Bezug genommen ist, damit in einer Ausführung der axialen Abstand zwischen axialen Stirnseiten des Schaufelfußes gemeint, wenn die (Herstellung der) Laufschaufel bzw. (von) deren Schaufelfuß(es) erläutert wird.

In einer Ausführung liegt ein Kreismittelpunkt in Axialrichtung betrachtet innerhalb der Scheibe, wenn er axial zwischen einer stromaufwärtigen und einer stromabwärtigen axialen Stirnseite der Scheibe liegt,
in Axialrichtung betrachtet außerhalb der Scheibe, wenn er axial nicht zwischen einer stromaufwärtigen und einer stromabwärtigen axialen Stirnseite der Scheibe liegt,
in Radialrichtung betrachtet innerhalb der Scheibe, wenn er radial innerhalb einer äußeren Umfangsfläche der Scheibe liegt, und
in Radialrichtung betrachtet außerhalb der Scheibe, wenn er radial nicht innerhalb einer äußeren Umfangsfläche der Scheibe liegt, bzw. ist dies jeweils gleichbedeutend bzw. synonym.

Entsprechend liegt in einer Ausführung ein Kreismittelpunkt in Axialrichtung betrachtet innerhalb des Schaufelfußes, wenn er axial zwischen einer stromaufwärtigen und einer stromabwärtigen axialen Stirnseite des Schaufelfußes liegt,
in Axialrichtung betrachtet außerhalb des Schaufelfußes, wenn er axial nicht zwischen einer stromaufwärtigen und einer stromabwärtigen axialen Stirnseite des Schaufelfußes liegt,
in Radialrichtung betrachtet innerhalb des Schaufelfußes, wenn er radial zwischen einer (scheibenzugewandten) Bodenfläche des Schaufelfußes und einem Schaufelblatt bzw. (scheibenabgewandten) radialen Ende des Schaufelfußes der Laufschaufel liegt, und
in Radialrichtung betrachtet außerhalb des Schaufelfußes, wenn er radial nicht zwischen einer (scheibenzugewandten) Bodenfläche des Schaufelfußes und einem Schaufelblatt bzw. (scheibenabgewandten) radialen Ende des Schaufelfußes der Laufschaufel liegt, bzw. ist dies jeweils gleichbedeutend bzw. synonym. Mit anderen Worten kann auch ein Kreismittelpunkt, der außerhalb des Schaufelfuß(volumen)(e)s angeordnet ist, im Sinne der vorliegenden Erfindung in Axialrichtung und/oder Radialrichtung betrachtet innerhalb des Schaufelfußes liegen, sofern seine axiale bzw. radiale Position entsprechend zwischen den axialen Stirnseiten des Schaufelfußes bzw. zwischen einer (scheibenzugewandten) Bodenfläche des Schaufelfußes und einem Schaufelblatt bzw. (scheibenabgewandten) radialen Ende des Schaufelfußes der Laufschaufel liegt, und ein

Kreismittelpunkt, der außerhalb der Scheibe bzw. des Scheibenvolumens angeordnet ist, im Sinne der vorliegenden Erfindung in Axialrichtung und/oder Radialrichtung betrachtet innerhalb der Scheibe liegen, sofern seine axiale bzw. radiale Position entsprechend zwischen den axialen Stirnseiten der Scheibe bzw. innerhalb einer äußeren Umfangsfläche der Scheibe liegt.

Weitere vorteilhafte Weiterbildungen der vorliegenden Erfindung ergeben sich aus den Unteransprüchen und der nachfolgenden Beschreibung bevorzugter Ausführungen. Hierzu zeigt, teilweise schematisiert:
- Fig. 1: eine Draufsicht auf eine Mantelfläche einer Rotorscheibe nach einer Ausführung der vorliegenden Erfindung;
- Fig. 2: einen Teilschnitt einer Schaufelnut der Rotorscheibe längs der Linie II-II in Fig. 1;
- Fig. 3: eine Fig. 1 entsprechende Draufsicht während einer Herstellung der Rotorscheibe;
- Fig. 4: die beschaufelte Rotorscheibe; und
- Fig. 5: einen Teil einer Laufschaufel nach einer Ausführung der vorliegenden Erfindung.

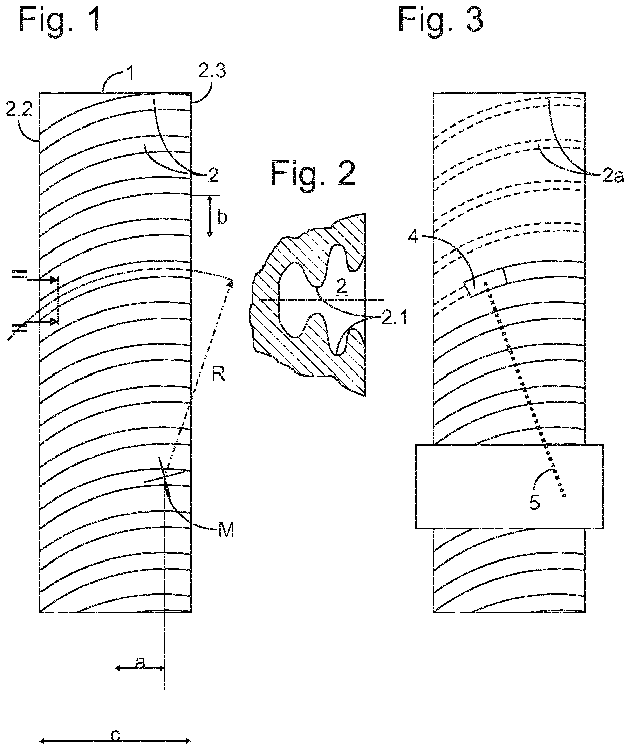

Fig. 1 zeigt eine Draufsicht auf eine Mantelfläche einer Rotorscheibe 1 für eine Verdichter- oder Turbinenstufe einer Flugtriebwerk-Gasturbine nach einer Ausführung der vorliegenden Erfindung.

Die Rotorscheibe 1 weist in Umfangsrichtung (vertikal in Fig. 1) verteilte Schaufelnuten 2 zur Befestigung von Laufschaufeln 3 an der Rotorscheibe auf, die in Axialrichtung (horizontal in Fig. 1) einen gekrümmten, kreissegmentförmigen Verlauf aufweisen, wobei ein Radius R des (jeweiligen) Kreissegments vorzugsweise wenigstens c/2 und/oder höchstens 100c, insbesondere höchstens 50c, in einer Ausführung höchstens 30c, in einer Weiterbildung höchstens 20c und in einer Ausführung höchstens 5c, beträgt und/oder ein Mittelpunkt M des Kreissegments von einer axialen Mitte der Rotorscheibe in Axialrichtung (jeweils) einen Abstand a von höchstens (R-c/2), insbesondere höchstens (R-c), in einer Ausführung höchstens, (R-5c) aufweist.

Mit c ist dabei der axiale Abstand zwischen einer stromaufwärtigen axialen Stirnseite 2.2 einer Schaufelnut und einer stromabwärtigen axialen Stirnseite 2.3 dieser Schaufelnut bezeichnet.

Fig. 2 zeigt in einem Teilschnitt längs der Linie II-II in Fig. 1 einen Querschnitt einer der gleichartig (hergestellten) Schaufelnuten 2 mit einem Tannenbaumprofil.

Zur Herstellung der Rotorscheiben können zunächst Kernbereiche 2a der Nuten 2 gefräst werden, wie im oberen Teil der Fig. 3 angedeutet. In einer bevorzugteren Ausführung können Kernbereiche 2a zusätzlich oder besonders bevorzugt alternativ auch mittels elektrochemischen Abtragens gefertigt werden.

Anschließend wird ein Werkzeug 4, das eine dem Kreissegment entsprechende gekrümmte Kontur aufweist, mittels einer nur sehr schematisch symbolisierten Führung 5 auf einer entsprechend gekrümmten Kreisbahn mit Radius R und Mittelpunkt M geführt, um die Kontur der jeweiligen Schaufelnut 2, insbesondere ihre Nutflanken 2.1 (vgl. Fig. 2) mittels elektrochemischen Abtragens endzufertigen. Radius Rund Mittelpunkt M dienen hierbei lediglich zur Definition der Trajektorie und sollen ausdrücklich keinen bestimmten Aufbau der Fertigungsmaschine implizieren. Radius R und/oder Mittelpunkt M können insbesondere (rein) virtuell sein.

In einer alternativen, besonders bevorzugten Ausführung können die Schaufelnuten 2 auch mittels elektrochemischen Abtragens, d.h. ohne vorheriges Ausfräsen oder elektrochemischen Abtragen von Kernbereichen 2a, erzeugt werden. Dadurch kann in einer Ausführung die Fertigungszeit reduziert werden. Entsprechend sind in Fig. 3 die Kernbereiche 2a gestrichelt dargestellt, um anzudeuten, dass diese bzw. ihre vorherige Ausbildung in einer besonders bevorzugten Ausführung entfällt.

Die stromaufwärtigen axialen offenen Stirnseite 2.2 der Schaufelnuten 2 sind gegenüber den stromabwärtigen axialen offenen Stirnseite 2.3 der jeweiligen Schaufelnut in Umfangsrichtung um b versetzt und weisen in Axialrichtung den Abstand c auf (vgl. Fig. 1). Der in den Figuren nicht eigens dargestellte axiale Abstand zwischen einer stromaufwärtigen axialen Stirnseite des Schaufelfußes und einer stromabwärtigen axialen Stirnseite des Schaufelfußes kann beispielsweise ebenfalls c sein.

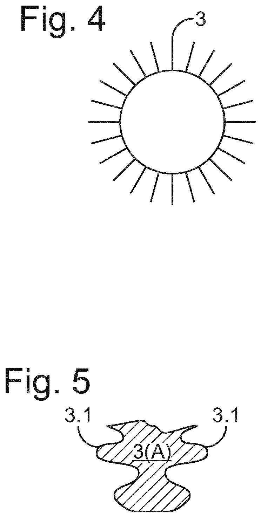

Fig. 4 zeigt stark schematisiert die mit Schaufeln 3 beschaufelte Rotorscheibe 1 in axialer Draufsicht.

Fig. 5 zeigt in einem Fig. 2 entsprechenden (gedrehten) Schnitt einen Teil einer der Laufschaufeln 3 bzw. dessen Schaufelfuß 3A mit Schaufelfußflanken 3.1.

Wie in der gesamten vorliegenden Offenbarung gelten die Ausführungen zur Rotorscheibe bzw. deren Schaufelnut(en) analog zur Laufschaufel bzw. deren Schaufelfuß und umgekehrt. Gleichwohl sei daraufhingewiesen, dass der Rotorscheiben- und der Laufschaufelaspekt auch jeweils eigenständig realisiert sein bzw. werden können und daher ausdrücklich auch eigenständig beansprucht werden. Insbesondere kann eine hier beschriebene Rotorscheibe mit andersartig gefertigten Laufschaufeln bestückt oder eine hier beschriebene Laufschaufel an einer andersartig gefertigten Rotorscheibe befestigten sein bzw. werden, wobei vorteilhaft, insbesondere aufgrund einander entsprechender Oberflächen und/oder gemeinsam genutzter Fertigungseinrichtungen, beide Aspekte gemeinsam realisiert sein bzw. werden können und daher ausdrücklich auch gemeinsam beansprucht werden.

Obwohl in der vorhergehenden Beschreibung exemplarische Ausführungen erläutert wurden, sei darauf hingewiesen, dass eine Vielzahl von Abwandlungen möglich ist. Außerdem sei darauf hingewiesen, dass es sich bei den exemplarischen Ausführungen lediglich um Beispiele handelt, die den Schutzbereich, die Anwendungen und den Aufbau in keiner Weise einschränken sollen. Vielmehr wird dem Fachmann durch die vorausgehende Beschreibung ein Leitfaden für die Umsetzung von mindestens einer exemplarischen Ausführung gegeben, wobei diverse Änderungen, insbesondere in Hinblick auf die Funktion und Anordnung der beschriebenen Bestandteile, vorgenommen werden können, ohne den Schutzbereich zu verlassen, wie er sich aus den Ansprüchen und diesen äquivalenten Merkmalskombinationen ergibt.

### Bezugszeichenliste

- 1: Rotorscheibe
- 2: Schaufelnut
- 2a: Kernbereich
- 2.1: Nutflanke
- 2.2: stromaufwärtige Schaufelnutstirnseite
- 2.3: stromabwärtige Schaufelnutstirnseite
- 3: Laufschaufel
- 3A: Schaufelfuß
- 3.1: Schaufelfußflanke
- 4: Werkzeug
- 5: Führung (symbolisch)
- a: axialer Abstand Rotorscheibenmitte - Mittelpunkt
- b: Abstand stromaufwärtige-stromabwärtige Schaufelnutstirnseite in Umfangsrichtung
- c: axialer Abstand stromaufwärtige-stromabwärtige Schaufelnutstirnseite
- M: Mittelpunkt
- R: Radius

## Patentansprüche

1. Verfahren zum Herstellen einer Rotorscheibe (1) für eine Verdichter- oder Turbinenstufe einer Flugtriebwerk-Gasturbine, wobei die Rotorscheibe wenigstens eine Schaufelnut (2) zur Anordnung eines Schaufelfußes (3A) einer Laufschaufel (3) zur Befestigung der Laufschaufel an der Rotorscheibe aufweist, wobei die Schaufelnut unter Verwendung eines elektrochemischen Abtragens gefertigt wird und in Axialrichtung einen ein- oder mehrfach gekrümmten Verlauf aufweist.

2. Verfahren zum Herstellen einer Laufschaufel (3) für eine Verdichter- oder Turbinenstufe einer Flugtriebwerk-Gasturbine, wobei die Laufschaufel einen Schaufelfuß (3A) zur Anordnung in einer Schaufelnut (2) einer Rotorscheibe (1) zur Befestigung der Laufschaufel an der Rotorscheibe aufweist, wobei der Schaufelfuß unter Verwendung eines elektrochemischen Abtragens gefertigt wird und in Axialrichtung einen ein- oder mehrfach gekrümmten Verlauf aufweist.

3. Verfahren nach einem der vorhergehenden Ansprüche, **dadurch gekennzeichnet, dass** der gekrümmte Verlauf eine Kreisbahn um einen Kreismittelpunkt aufweist, insbesondere ist, und/oder wenigstens teilweise, insbesondere vollständig, innerhalb einer Ebene verläuft.

4. Verfahren nach Anspruch 3, **dadurch gekennzeichnet, dass** der Kreismittelpunktin Axialrichtung und/oder Radialrichtung betrachtet innerhalb der herzustellenden Scheibe liegt, oder
dass der Kreismittelpunkt in Axialrichtung und/oder Radialrichtung betrachtet außerhalb der herzustellenden Scheibe liegt.

5. Verfahren nach einem der Ansprüche 3 bis 5, **dadurch gekennzeichnet, dass** die Ebene parallel zur Axialrichtung verläuft und/oder senkrecht zur Radialrichtung verläuft oder
dass die Ebene gekippt zur Axialrichtung verläuft.

6. Verfahren nach einem der vorhergehenden Ansprüche, **dadurch gekennzeichnet, dass** wenigstens ein Abschnitt einer Kontur der Schaufelnut der herzustellenden Scheibe bzw. des Schaufelfußes der herzustellenden Laufschaufel, insbesondere wenigstens 50% einer Nutflanke (2.1) bzw. einer Schaufelfußflanke (3.1), mittels elektrochemischen Abtragens endgefertigt und/oder die Schaufelnut der herzustellenden Scheibe bzw. der Schaufelfuß der herzustellenden Laufschaufel mittels elektrochemischen Abtragens erzeugt wird.

7. Verfahren nach einem der vorhergehenden Ansprüche, **dadurch gekennzeichnet, dass** das elektrochemische Abtragen zur Fertigung der Schaufelnut der herzustellenden Scheibe bzw. des Schaufelfußes der herzustellenden Laufschaufel, insbesondere zur Endfertigung des Abschnitts der Kontur der Schaufelnut der herzustellenden Scheibe bzw. des Schaufelfußes der herzustellenden Laufschaufel und/oder Erzeugung der Schaufelnut der herzustellenden Scheibe bzw. des Schaufelfußes der herzustellenden Laufschaufel, ein PECM, Puls-ECM, ECF und/oder ECDM-Verfahren umfasst.

8. Verfahren nach einem der vorhergehenden Ansprüche, **dadurch gekennzeichnet, dass** ein Werkzeug (4) zum elektrochemischen Abtragen zur Fertigung der Schaufelnut der herzustellenden Scheibe bzw. des Schaufelfußes der herzustellenden Laufschaufel, insbesondere zur Endfertigung des Abschnitts der Kontur der Schaufelnut der herzustellenden Scheibe bzw. des Schaufelfußes der herzustellenden Laufschaufel und/oder Erzeugung der Schaufelnut der herzustellenden Scheibe bzw. des Schaufelfußes der herzustellenden Laufschaufel, eine gekrümmte Kontur aufweist und/oder auf einer gekrümmten Bahn geführt wird, und/oder
dass die Schaufelnut der herzustellenden Scheibe bzw. der Schaufelfuß der herzustellenden Laufschaufel einen kreissegmentförmigen Verlauf aufweist.

9. Verfahren nach dem vorhergehenden Anspruch, **dadurch gekennzeichnet, dass** ein Radius des Kreissegments wenigstens die Hälfte und/oder höchstens das 100fache eines axialen Abstands zwischen einer stromaufwärtigen axialen Stirnseite der Schaufelnut der herzustellenden Scheibe bzw. des Schaufelfußes der herzustellenden Laufschaufel und einer stromabwärtigen axialen Stirnseite der Schaufelnut der herzustellenden Scheibe bzw. des Schaufelfußes der herzustellenden Laufschaufel beträgt und/oder ein Mittelpunkt des Kreissegments von einer axialen Mitte der herzustellenden Rotorscheibe bzw. des Schaufelfußes der herzustellenden Laufschaufel in Axialrichtung einen Abstand aufweist, der höchstens gleich der Differenz eines Radius des Kreissegments minus der Hälfte eines axialen Abstands zwischen einer stromaufwärtigen axialen Stirnseite der Schaufelnut der herzustellenden Scheibe bzw. des Schaufelfußes der herzustellenden Laufschaufel und einer stromabwärtigen axialen Stirnseite der Schaufelnut der herzustellenden Scheibe bzw. des Schaufelfußes der herzustellenden Laufschaufel ist.

10. Verfahren nach einem der vorhergehenden Ansprüche, **dadurch gekennzeichnet, dass** eine stromaufwärtige axiale Stirnseite der Schaufelnut der herzustellenden Scheibe bzw. des Schaufelfußes der herzustellenden Laufschaufel gegenüber einer stromabwärtigen axialen Stirnseite der Schaufelnut der herzustellenden Scheibe bzw. des Schaufelfußes der herzustellenden Laufschaufel nicht oder in oder entgegen der Rotationsrichtung versetzt ist, insbesondere um höchstens den axialen Abstand zwischen einer stromaufwärtigen axialen Stirnseite der Schaufelnut der herzustellenden Scheibe bzw. des Schaufelfußes der herzustellenden Laufschaufel und einer stromabwärtigen axialen Stirnseite der Schaufelnut der herzustellenden Scheibe bzw. des Schaufelfußes der herzustellenden Laufschaufel, und/oder einen axialen Abstand von wenigstens 10 mm und/oder höchstens 100 mm aufweist.

11. Verfahren nach einem der vorhergehenden Ansprüche, **dadurch gekennzeichnet, dass** die Schaufelnut der herzustellenden Scheibe bzw. der Schaufelfuß der herzustellenden Laufschaufel wenigstens abschnittsweise, insbesondere auf wenigstens 50% einer Nutflanke (2.1) bzw. Schaufelfußflanke (3.1), einen Mittenrauwert von höchstens 2,0 µm aufweist, und/oder
dass die Schaufelnut und/oder der Schaufelfuß in Radialrichtung eine oder mehrere Hinterschneidungen, insbesondere ein Schwalbenschwanz- oder Tannenbaumprofil, aufweist.

12. Rotorscheibe (1) für eine Verdichter- oder Turbinenstufe einer Flugtriebwerk-Gasturbine, wobei die Rotorscheibe nach einem Verfahren nach einem der vorhergehenden Ansprüche 1, 3-15 hergestellt ist
, wobei insbesondere ihre wenigstens eine Schaufelnut (2) , die in Axialrichtung einen ein- oder mehrfach gekrümmten Verlauf aufweist, eine Kontur aufweist, die wenigstens abschnittsweise mittels elektrochemischen Abtragens endgefertigt ist, wobei insbesondere die Schaufelnut teilweise oder vollständig über ihren Querschnitt durchgängig in Axialrichtung durch die Rotorscheibe verläuft.

13. Laufschaufel (3) für eine Verdichter- oder Turbinenstufe einer Flugtriebwerk-Gasturbine, wobei die Laufschaufel (3) nach einem Verfahren nach einem der vorhergehenden Ansprüche 2-15 hergestellt ist
, wobei insbesondere ihr Schaufelfuß, der in Axialrichtung einen ein- oder mehrfach gekrümmten Verlauf aufweist, eine Kontur aufweist, die wenigstens abschnittsweise mittels elektrochemischen Abtragens endgefertigt ist.

14. Verdichter- oder Turbinenstufe für eine Flugtriebwerk-Gasturbine mit wenigstens einer Rotorscheibe (1) und wenigstens einer Laufschaufel (3) mit einem Schaufelfuß (3A), der zur Befestigung der Laufschaufel an der Rotorscheibe in einer Schaufelnut (2) der Rotorscheibe, insbesondere form- und/oder reibschlüssig, angeordnet ist, wobei die Rotorscheibe (1) eine Rotorscheibe nach Anspruch 16 oder 17 und/oder die Laufschaufel (3) eine Laufschaufel nach Anspruch 18 oder 19 ist.

15. Flugtriebwerk-Gasturbine mit wenigstens einer Rotorscheibe (1) und/oder Laufschaufel (3), insbesondere Verdichter- oder Turbinenstufe, nach einem der vorhergehenden Ansprüche.
